# FASCICULE DE BREVET EUROPEEN

(11) **EP 2 770 094 B1**
(45) Date de publication et mention de la délivrance du brevet: **18.10.2017**
(21) Numéro de dépôt: 14156491.4
(22) Date de dépôt: 25.02.2014
(51) Int. Cl.: D03C 1/14, D03C 9/06, F16C 7/06

(54) **Bielle pour un métier à tisser et métier à tisser comprenant cette bielle**
Verbindungsstange für eine Webmaschine und Webmaschine, die eine solche Verbindungsstange umfasst
Connecting rod for a weaving machine and weaving machine comprising said connecting rod

(30) Priorité: 25.02.2013 FR 1351641
(43) Date de publication de la demande: 27.08.2014
(73) Titulaire: STÄUBLI FAVERGES, 74210 Faverges (FR)
(72) Inventeur: Tardy, Bastien, 74370 Argonay (FR); Murat, Julien, 74210 MARLENS (FR)
(74) Mandataire: Lavoix

(56) Documents cités:
- EP-A1- 0 574 081
- DE-A1- 19 941 995
- DE-U1- 8 205 220
- DE-U1- 8 226 364
- FR-A1- 2 446 337

## Description

L'invention concerne une bielle appartenant à un tirage pour un métier à tisser ainsi qu'un tirage pour métier à tisser comprenant une telle bielle et un métier à tisser comprenant un tel tirage. Dans le domaine du tissage, il est connu d'entrainer des cadres de lisses d'un métier à tisser au moyen d'un dispositif de formation de la foule, tel qu'une ratière ou une mécanique d'armure fondamentale.

L'invention s'applique particulièrement à la bielle rattachée au dispositif de formation de la foule.

Ce dispositif de formation de la foule se présente généralement sous la forme d'un ensemble placé sur le côté du métier à tisser et comprenant des leviers de sortie disposés côte à côte et animés de mouvements d'oscillation programmables d'amplitudes déterminées. Chaque cadre est connecté à un levier de sortie par l'intermédiaire d'un ensemble d'éléments de transmission articulés entre eux. On appelle cet ensemble un tirage. Un cadre de lisses et son tirage associé ont un encombrement dans le sens de la chaine qui est très réduit. Cet encombrement est appelé division. Il est généralement limité à 12mm.

Sur un métier à tisser, la hauteur de la nappe des fils de chaîne, définie comme la distance verticale du sol à la nappe des fils de chaîne aux croisements des cadres de lisses, est souvent adaptée pour des besoins d'équilibre de tension, en fonction des effets textiles recherchés. Il est donc nécessaire de pouvoir ajuster la hauteur de chaque cadre de lisses.

Il existe donc des moyens de réglage de la hauteur d'un cadre de lisses qui interviennent au sein des éléments de tirage reliant le cadre de lisses au levier de sortie. Plus spécifiquement, WO-A-2005/121423 divulgue un métier à tisser dans lequel la longueur des bielles au cadre, c'est-à-dire des bielles situées juste en dessous d'un cadre de lisses, est réglable. Ce document divulgue une bielle au cadre économique mais qui nécessite d'intervenir en deux points correspondants aux deux extrémités du cadre de lisses. En effet, cette bielle au cadre n'incorpore aucun dispositif de maintien de sa longueur. Ainsi, lors du réglage de la hauteur du cadre de lisses, celui-ci doit être maintenu pour contrebalancer l'effet de la gravité. En pratique, le réglage de la hauteur du cadre de lisses requiert deux personnes pour assurer, d'une part, le maintien du cadre et, d'autre part, l'ajustement de la longueur de la bielle. Pour pallier cet inconvénient, il est connu d'agir, non pas sur la bielle au cadre, mais sur la position de l'articulation de la première bielle reliée au levier de sortie du dispositif de formation de la foule et appelée bielle d'attaque. Pour ce faire, il est connu de EP-A-0 744 482 d'utiliser une agrafe de réglage de foule qui vient se fixer, de manière réglable, sur un levier de sortie d'une mécanique d'armure. Cette agrafe est réalisée à partir de deux étriers imbriqués et mobiles l'un par rapport à l'autre par l'intermédiaire d'une vis. Le premier supporte des moyens de serrage sur le levier de sortie alors que le deuxième supporte l'articulation de la bielle d'attaque du tirage. Une construction basée sur l'utilisation de coins permet d'obtenir simultanément le blocage de l'agrafe sur le levier de sortie et l'immobilisation relative des deux étriers. Le réglage de la hauteur du cadre est obtenu en déplaçant les étriers l'un par rapport à l'autre suivant une direction globalement orthoradiale à l'axe d'articulation du levier de sortie. Cette solution est très ergonomique, mais ce type d'agrafe est fragile puisqu'il faut construire dans la division, c'est-à-dire dans un espace réduit, deux étriers imbriqués. Cela s'avère particulièrement délicat et onéreux dans la fabrication.

Selon une autre alternative connue de WO-A-2006/063687, le réglage de la hauteur du cadre s'obtient en agissant sur la longueur d'une bielle d'attaque qui comprend un premier embout de liaison à une première articulation et apte à coulisser dans un deuxième embout de liaison à une deuxième articulation qui dispose de moyen de serrage du premier embout. L'écartement entre les deux embouts est obtenu en agissant sur une vis de réglage dont l'axe est parallèle à l'axe longitudinal de la bielle. Cette vis de réglage n'est pas disposée de manière ergonomique puisque l'opérateur est gêné, lors de sa manipulation, par des bielles adjacentes. De plus, il dispose d'un débattement angulaire réduit pour faire tourner sa clé.

Par ailleurs, DE-U-82 26 364 divulgue une bielle appartenant à un tirage d'un métier à tisser. Cette bielle comporte un premier embout et un deuxième embout, à l'intérieur duquel est inséré un barreau. Le premier embout est solidaire d'un tube équipé de moyens de serrage du barreau à l'intérieur du tube et des moyens de réglage du positionnement du barreau à l'intérieur du tube. La longueur de la bielle est réglée en agissant à la fois sur les moyens de réglage et sur les moyens de serrage. Un inconvénient de cette bielle est que les moyens de réglage sont difficiles à manoeuvrer. C'est à ces inconvénients qu'entend plus particulièrement remédier l'invention en proposant une bielle à longueur réglable avec une opération de réglage simplifiée et plus ergonomique.

A cet effet, l'invention concerne une bielle permettant une liaison entre deux articulations d'axes parallèles et une transmission à un cadre de lisses appartenant à un métier à tisser, des mouvements d'oscillation d'un levier de sortie d'un dispositif de formation de la foule, cette bielle comprenant un premier embout de liaison à une première articulation et solidaire d'un barreau longitudinal, un deuxième embout de liaison à une deuxième articulation et comportant des moyens de serrage du barreau accessibles depuis un côté de la bielle et des moyens d'écartement des embouts le long d'un axe longitudinal de la bielle. Les moyens d'écartement comprennent un organe d'appui sur une surface inclinée dont la normale est comprise dans un plan perpendiculaire aux axes des articulations et qui est inclinée par rapport à l'axe longitudinal de la bielle. L'organe d'appui est déplaçable dans une direction perpendiculaire à un plan contenant les axes des articulations.

Grâce à l'invention, il est possible de régler la longueur de la bielle sans être gênée par les bielles adjacentes et selon un seul point d'intervention. La bielle comporte des moyens d'écartement simple et facile à mettre en oeuvre. Elle présente une économie de moyens puisqu'elle n'incorpore pas nécessairement des moyens de rapprochement des embouts.

Selon des aspects avantageux mais non obligatoires de l'invention, une bielle peut incorporer une ou plusieurs des caractéristiques suivantes prises dans toute combinaison techniquement admissible :
- La surface inclinée appartient à l'un au moins des embouts.
- La normale orientée vers l'extérieur de la surface inclinée est inclinée par rapport à l'axe longitudinal de la bielle d'un angle compris entre 20 et 50 degrés.
- La surface inclinée est réalisée sur le barreau.
- L'organe d'appui est un coin qui prend appui sur la surface inclinée du barreau.
- L'organe d'appui est une vis de réglage.
- L'organe d'appui est un étrier, intercalé entre le premier embout et le deuxième embout et présentant une ouverture s'étendant suivant un axe parallèle à l'axe longitudinal de la bielle et entourant le barreau.
- L'étrier comporte au moins une surface d'appui dont la normale est inclinée par rapport à l'axe longitudinal de la bielle.
- L'étrier comporte une vis de réglage apte à déplacer l'étrier dans une direction perpendiculaire à un plan contenant les axes des articulations de la bielle.
- Les moyens d'écartement comprennent des moyens de rappel élastique de l'étrier s'opposant à l'action de la vis de réglage.
- Les moyens d'écartement des embouts de la bielle et les moyens de serrage du barreau sont manoeuvrables depuis le même côté de la bielle.
- La bielle est munie d'un moyen d'indication de l'écartement entre les deux embouts le long de l'axe longitudinal.
- Le moyen d'indication de l'écartement entre les deux embouts le long de l'axe longitudinal agit entre un des embouts et les moyens d'écartement des deux embouts.

L'invention concerne également un métier à tisser caractérisé en ce qu'il comprend une bielle comme décrite précédemment.

L'invention sera mieux comprise et d'autres avantages de celle-ci apparaitront plus clairement à la lumière de la description qui va suivre de quatre modes de réalisation d'une bielle conforme à son principe, donnée uniquement à titre d'exemple et faite en référence aux dessins annexés dans lesquels :
- la figure 1 est une représentation schématique, d'un métier à tisser conforme à l'invention, dans un plan perpendiculaire aux fils de chaine,
- la figure 2 est une vue en perspective d'une bielle conforme à l'invention appartenant au métier à tisser de la figure 1,
- la figure 3 est une coupe longitudinale de la bielle de la figure 2, dans une première configuration,
- la figure 4 est une coupe longitudinale de la bielle de la figure 2 dans une deuxième configuration,
- la figure 5 est une vue en perspective d'un étrier appartenant à la bielle des figure 2 à 4,
- la figure 6 est une vue partielle analogue à la figure 2, pour une bielle conforme à un deuxième mode de réalisation de l'invention.
- la figure 7 est une coupe longitudinale partielle d'une bielle conforme à un troisième mode de réalisation de l'invention,
- la figure 8 est une coupe longitudinale partielle d'une bielle appartenant au métier à tisser conforme à un quatrième mode de réalisation de l'invention et
- la figure 9 est une vue partielle selon la flèche IX la figure 2.

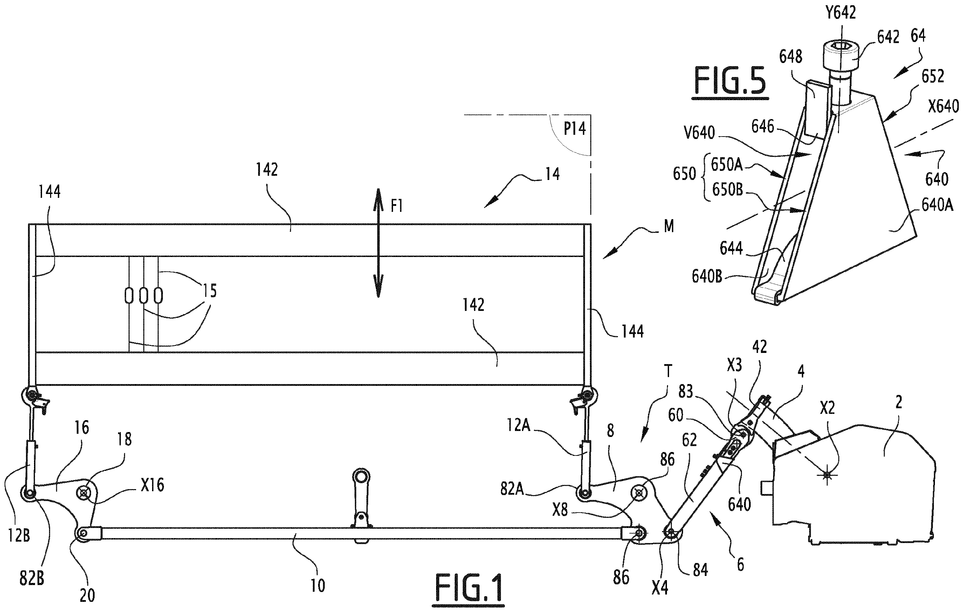

Sur la figure 1 est représenté un métier à tisser M conforme à l'invention qui comprend plusieurs cadres de lisses 14 et dont un seul est visible sur cette figure, avec la référence 14. Le cadre de lisses 14 est formé par deux montants 144 et deux traverses 142 on définit un plan P14 comme le plan du cadre de lisses 14, ce plan P14 est formé par deux lignes selon lesquelles s'étendent un montant 144 et une traverse 142. Ce plan P14 est aussi le plan de la figure 1. Le cadre 14 porte plusieurs dizaines, voire plusieurs centaines de lisses de guidage des fils de chaîne, dont trois sont représentés à la figure 1, avec la référence 15. Pour la clarté de la description, un seul cadre de lisses 14 est représenté à la figure 1 alors qu'en réalité, au moins deux cadres de lisses sont nécessaires pour former une foule au sein des fils de chaine. Pour générer la foule, il est nécessaire de déplacer le cadre de lisses 14 selon un mouvement alternatif vertical, c'est-à-dire perpendiculaire à la nappe des fils de chaine. Ce mouvement est représenté à la figure 1 par une flèche à double sens F1. Cette mise en mouvement est assurée par un ensemble d'agrafes de réglage de foule, de bielles, d'arbres et de leviers qui sont articulés entre eux suivant des axes perpendiculaires au plan P14 et constituent un tirage T appartenant au métier à tisser M. Le tirage T est associé à un dispositif de formation de la foule qui, dans l'exemple considéré, est une ratière 2. La ratière 2 comporte, pour chaque cadre de lisses 14, un levier de sortie 4 qui, en configuration d'utilisation, oscille en rotation autour d'un axe X2 perpendiculaire au plan de la figure 1.

Le levier de sortie 4 est pourvu d'une agrafe de réglage de foule 42 qui supporte une articulation 83 sur laquelle se connecte une première extrémité de la bielle 6. En serrant l'agrafe de réglage de foule 42 à différentes hauteurs sur le levier de sortie 4, on fait varier l'amplitude des mouvements du cadre de lisses 14. Une deuxième extrémité de la bielle 6 est connectée à une articulation 84 supportée par un levier 8 apte à tourner autour d'un pivot 86 d'axe de rotation X8 fixe par rapport au métier à tisser M et normal au plan P14. Le levier 8 supporte une autre articulation 82A sur laquelle se connecte la première extrémité d'une bielle au cadre 12A dont la deuxième extrémité est reliée à une autre articulation solidaire du cadre de lisses 14. Le levier 8 dispose par ailleurs d'une autre articulation 86 sur laquelle se connecte la première extrémité d'une bielle 10 qui s'étend horizontalement sous le cadre de lisses 14 et dont la deuxième extrémité se connecte à une articulation 20 supportée par un levier 16 apte à tourner autour d'un pivot 18 d'axe de rotation X16 fixe par rapport au métier à tisser et également normal au plan P14. Le levier 16 supporte une autre articulation 82B sur laquelle se connecte une première extrémité d'une bielle au cadre 12B, dont la deuxième extrémité est reliée à une autre articulation solidaire du cadre de lisses 14. Toutes les articulations permettent, au moyen de roulements, la rotation d'un élément du tirage T par rapport à un autre, autour d'un axe perpendiculaire au plan P14 du cadre de lisse 14. De ce fait, l'oscillation du levier de sortie 4 est transmise aux leviers 8 et 16 et est transformée en un mouvement de translation du cadre de lisses 14 selon la direction F1. Le tirage T est conçu de manière à ce que les deux bielles au cadre 12 aient un déplacement vertical identique.

Dans le but de pouvoir régler la hauteur du cadre de lisses 14 par rapport au bâti non représenté, on utilise le fait que la bielle 6 du métier à tisser M est à longueur réglable et la direction selon laquelle la bielle s'étend ou se raccourcit est contenue dans le plan P14 du cadre de lisses 14.

Cette bielle 6 comprend un premier embout 60 de liaison à l'articulation 83 d'axe de rotation X3 portée par l'agrafe de réglage de foule 42 et un deuxième embout 62 de liaison à l'articulation 84 d'axe de rotation X4 portée par le levier 8. Elle s'étend selon un axe longitudinal X6 qui croise de manière orthogonale les axes de rotation X3 et X4 et appartient au plan du cadre de lisses P14. On note par ailleurs Y6 un axe contenu dans le plan du tirage T et qui est perpendiculaire à l'axe X6. Ainsi, une direction « longitudinale » de la bielle 6 est une direction prise parallèlement à l'axe X6 tandis qu'une direction « transversale » de la bielle 6 est une direction prise parallèlement à l'axe Y6.

On note P6 un plan contenant les axes X6 et Y6. On note P34 un plan contenant les axes X3 et X4. Les plans P6 et P34 sont perpendiculaires.

Le premier embout 60 est formé par deux flasques 600 rivés sur un barreau 610 qui présente une section rectangulaire et s'étend suivant l'axe X6.. Le barreau 610 comprend deux perçages traversants 611 suivant des axes parallèles aux axes d'articulation X3 et X4, qui lors du montage, sont alignés avec des perçages 604 des deux flasques 600. Les rivets de l'embout 60 ne sont pas représentés mais sont en pratique insérés dans les perçages 604 et 611, respectivement des flasques 600 et du barreau 610.

Le deuxième embout 62 est fabriqué à partir d'un tube creux à section rectangulaire.

Chaque embout 60 et 62 définit respectivement une extrémité 6A et 6B de la bielle 6. On note L6 la longueur de la bielle 6 mesurée parallèlement à l'axe X6, entre les axes d'articulation X3 et X4.

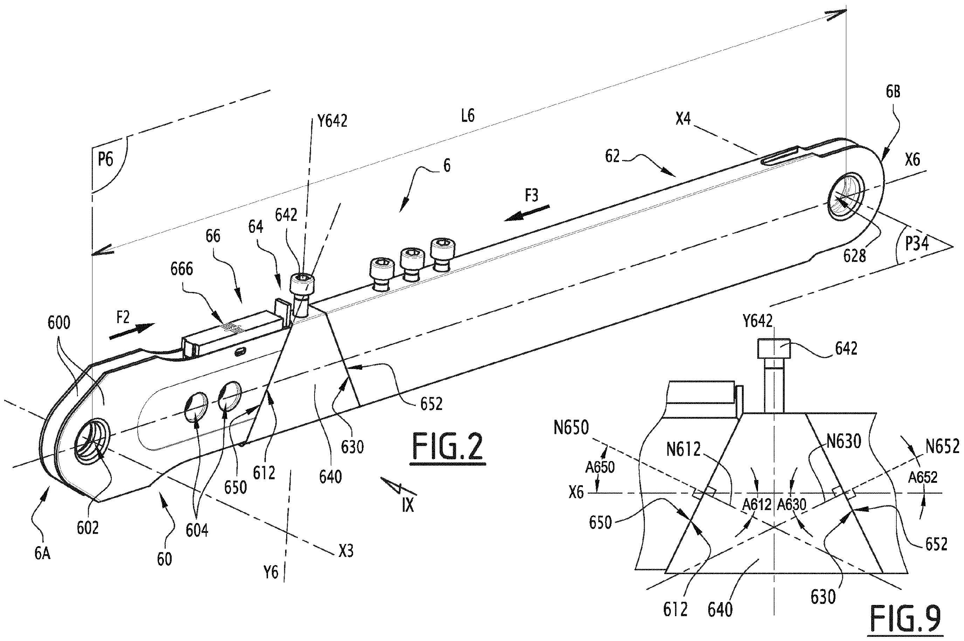

Dans la suite de la description, on considère la direction « avant » d'un embout, comme la direction opposée à l'extrémité de la bielle 6 définie par cet embout, c'est-à-dire pointant vers le centre de la bielle. Les directions F2 et F3 sur la figure 2 représentent chacune la direction avant respectivement des embouts 60 et 62. Ainsi, le premier embout 60 comprend, à son extrémité arrière 6A, un perçage traversant 602 suivant l'axe de rotation X3 et qui permet le passage de moyens de raccordement à l'articulation 83 portée par l'agrafe de réglage de foule 42. De même, le deuxième embout 62 comprend, à son extrémité arrière 6B, un perçage traversant 628 suivant l'axe de rotation X4 et qui permet le passage de moyens de raccordement à l'articulation 84 du levier 8.

Le premier embout 60 comprend à l'avant, une surface 612 qui est usinée dans l'épaisseur des flasques 600 et dont la normale N612 orientée de la pièce vers l'extérieur est inclinée d'un angle A612 par rapport à l'axe longitudinal X6 de la bielle 6. De même, le deuxième embout 62 comporte à son extrémité avant, une surface 630 usinée dans la section du tube creux et dont la normale N630 orientée de la pièce vers l'extérieur est inclinée d'un angle A630 par rapport à l'axe X6. Les normales N612 et N630 sont comprises dans le plan P6. Les surfaces 612 et 630 sont inclinées avec des pentes opposées mais la valeur de l'angle A612 est égale à la valeur de l'angle A630.

En pratique, la valeur des angles A612 et A630 est choisie entre 20° et 50°, de préférence entre 25° et 45°, de préférence encore de l'ordre de 28°.

La bielle 6 comprend également des moyens d'écartement 64 selon l'axe X6, du premier embout 60 et du deuxième embout 62. Les moyens d'écartement 64 comprennent un étrier 640 qui est fabriqué à partir d'un tube creux à section rectangulaire qui s'étend selon un axe X640 et que l'on découpe transversalement en deux endroits. En configuration montée de l'étrier 640 sur la bielle 6, l'axe X640 est parallèle voire confondu avec l'axe X6 de la bielle. On note 650 et 652 les deux surfaces de découpe de l'étrier 640. Les surfaces 650 et 652 présentent chacune une normale N650 ou N652 orientée de la pièce vers l'extérieur et inclinée, par rapport à un axe longitudinal du tube dans lequel a été découpé l'étrier 640, de manière identique respectivement aux normales N612 et N630 des surfaces 612 et 630 du premier embout 60 et du deuxième embout 62. En d'autres termes, l'angle A650 d'inclinaison de la normale de la surface 650 orientée de l'étrier 640 vers l'extérieur et l'angle A652 d'inclinaison de la normale de la surface 652 orientée de l'étrier 640 vers l'extérieur, par rapport à l'axe longitudinal X6, sont respectivement égaux aux angles A612 et A630. Les normales N612, N630, N650 et N652 ainsi que les angles A612, A630, A650 et A652 sont mieux visibles à la figure 9.

Comme cela ressort de la figure 5, la surface 650 est formée par deux surfaces unitaires 650A et 650B qui sont chacune définies par une tranche d'une paroi 640A et 640B de l'étrier 640, de part et d'autre d'un volume interne V640 de cet étrier dans lequel est engagé un barreau 610 appartenant au premier embout 60 en configuration montée de la bielle 6. De même, la surface 652 est formée de deux surfaces définies chacune par une tranche d'une des parois 640A et 640B. Les parois unitaires 650A, 650B et équivalentes sont adaptées pour être en appui surfacique, d'une part, sur les flasques 600 et, d'autres part, sur les grands côtés du tube creux formant l'embout 62. L'étrier 640 est donc un organe d'appui agissant sur les surfaces inclinées 612 et 630.

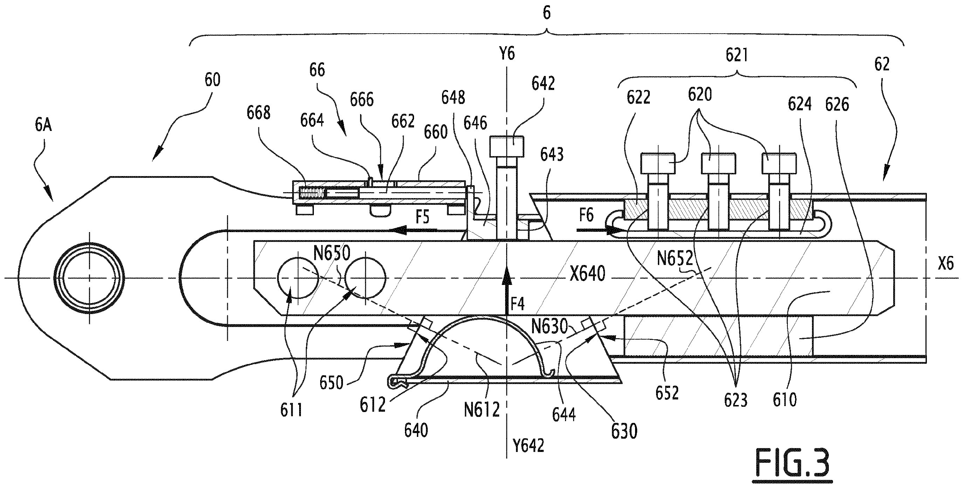

Dans la suite de la description, les directions « haut » et « bas » se réfèrent aux configurations des figures 3 à 8.

L'étrier 640 a donc une forme globalement triangulaire. Il comporte une vis de réglage 642 qui est insérée transversalement à travers l'étrier 640, dans un taraudage 643 prévu dans une entretoise 646. Ce taraudage 643 a un pas de vis complémentaire de celui de la vis 642. L'entretoise 646 est solidaire du bord supérieur de l'étrier 640, ce bord supérieur étant défini comme la partie haute aux figures 2 à 4. Cette entretoise 646 est maintenue solidaire de l'étrier 640 par soudage.

On note Y642 un axe selon lequel s'étend la vis 642 qui prend appui sur le barreau 610 qui dépasse longitudinalement vers l'avant du premier embout 60. L'axe Y642 est confondu avec l'axe Y6 lorsque la vis 642 est montée sur l'étrier 640. A savoir, l'axe Y642 est perpendiculaire à l'axe X6 et est contenu dans le plan P14 du cadre 14. De cette manière, l'accès à la vis 642 est facilité et sa manipulation est simplifiée. Le barreau 610 traverse l'étier 640 et est inséré en partie dans le deuxième embout 62. Le barreau 610 est fixé au premier embout 60 par rivetage entre les deux flasques 600. Du côté opposé à la vis de réglage 642 et, à l'intérieur de l'étrier 640, est disposé une lame flexible 644 qui prend appui, d'une part, sur le fond de l'étrier 640 et, d'autre part, sur le barreau 610. Cette lame 644 est donc un moyen de rappel élastique de l'étrier 640

Le deuxième embout 62 comporte des moyens de serrage 621 de l'embout 62 sur le barreau 610. Etant donné que le barreau 610 est solidaire du premier embout 60, les moyens de serrage 621 permettent donc de solidariser le premier embout 60 avec le deuxième embout 62. Les moyens de serrage 621 comprennent trois vis de serrage 620 orientées parallèlement à la vis de réglage 642. Ces vis de serrage 620 sont insérées au travers de trous pratiqués dans la paroi du tube dans trois taraudages 623 percés dans une plaquette de serrage 622. Les vis de serrage sont manoeuvrables depuis le même côté que la vis de réglage de la longueur de la bielle. Ceci rend l'opération de réglage plus ergonomique. En dessous de la plaquette de serrage 622 est située une lame d'appui 624. Les vis 620 exercent donc, lors de leur serrage, une pression vers la bas sur la lame d'appui 624. La lame d'appui 624 est en acier à haute résistance mécanique de manière à éviter le matage du barreau 610. En dessous du barreau à la figure 3, est représentée une plaquette de bridage 626 qui permet de maintenir le barreau 610 en étau. Le serrage des vis 620 résulte donc en un resserrement de l'étau formé par la plaquette de bridage 626 et la lame d'appui 624.

Le premier embout 60 comporte également un indicateur d'écartement 66 qui s'étend parallèlement à l'axe X6 de la bielle 6. Cet indicateur d'écartement 66 comprend un boîtier 660 qui est fixé latéralement à la bielle 6 entre les deux flasques 600 du premier embout 60. Le boîtier 660 contient un doigt de palpage 662 qui porte extérieurement un pion 664 orienté transversalement à l'axe X6 et parallèlement à l'axe Y6. Le doigt de palpage 662 prend appui, d'une part, sur un ressort 668 et, d'autre part, sur une partie recourbée 648 de l'entretoise 646. Le pion 664 dépasse du boîtier 660 à travers une fente graduée 666 permettant de mesurer le déplacement du doigt 662 par rapport au boîtier 660.

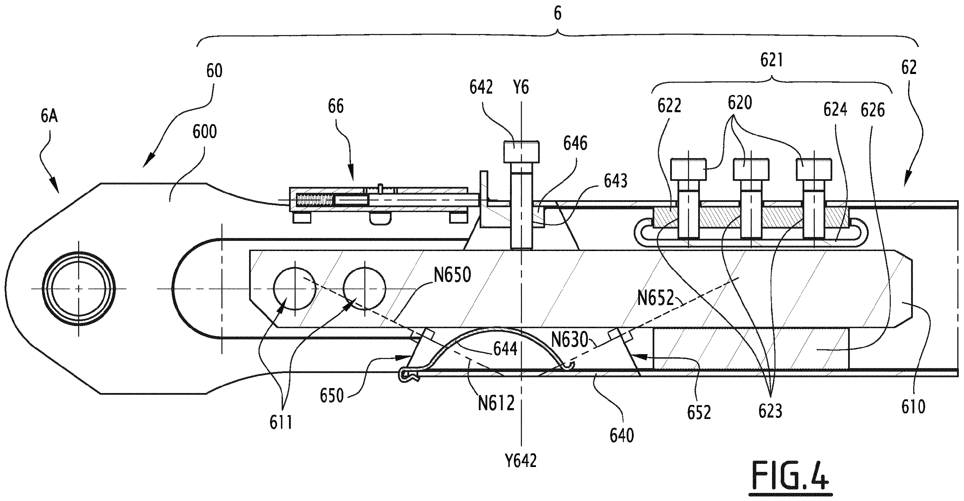

Les figures 3 et 4 montrent respectivement la bielle 6 dans une position raccourcie et dans une position écartée. Lors du réglage de la longueur de la bielle 6, il convient en premier lieu de desserrer les vis de serrage 620 afin de désolidariser le barreau 610 du deuxième embout 62 et, par conséquent, le premier embout 60 du deuxième embout 62. Compte tenu de la géométrie du tirage T, l'effet de la pesanteur permet de maintenir le premier embout 60 et le deuxième embout 62 en appui contre l'étrier 640.

Pour augmenter la hauteur du cadre de lisses 14, il convient d'augmenter la longueur de la bielle 6, par exemple en passant de la configuration de la figure 3 à la configuration de la figure 4. Pour cela, on serre la vis 642 dans le taraudage 643 de l'entretoise 646. La vis 642 prend appui sur le barreau 610, celle-ci est donc immobile en translation, le long de l'axe Y642, par rapport au barreau 610. Cela permet, par complémentarité du pas de vis, de déplacer l'entretoise 646 vers le haut des figures 3 et 4, c'est-à-dire l'éloigner du barreau 610. L'entretoise 646 est solidaire de l'étrier 640 donc celui-ci se déplace également vers le haut, c'est-à-dire, par rapport au barreau 610, du côté de la vis de réglage 642. L'étrier 640 se déplace parallèlement à l'axe Y6, c'est-à-dire perpendiculairement au plan P34 contenant les axes X3 et X4 des articulations 83 et 84, et pousse alors le premier embout 60 et le deuxième embout 62 chacun vers l'arrière. Plus précisément, les surfaces 650 et 652 transmettent, du fait de la complémentarité de leur inclinaison avec les surfaces 612 et 630, un effort longitudinal d'écartement des embouts 60 et 62 selon l'axe X6. Les surfaces 650 et 652 sont donc des surfaces de came. Ainsi, l'étrier 640 joue le rôle d'un coin qui transmet l'effort transversal résultant du serrage de la vis 642 en un effort longitudinal. On parle d'un dispositif à coin. L'effort transversal est représenté à la figure 3 par la flèche F4, alors que les efforts longitudinaux s'exerçant respectivement sur l'embout 60 et 62 sont représentés par les flèches F5 et F6. Le déplacement de l'étrier 640 vers le haut implique que la lame flexible 644 est comprimée. Celle-ci exerce donc un effort élastique vers le haut sur le barreau 610.

En outre, lors de son déplacement parallèlement à l'axe Y6, l'étrier 640 se déplace également, par rapport à chacun des embouts 60 et 62, parallèlement à l'axe X6. L'étrier 640 est donc déplaçable selon les axes X6 et Y6 dans le plan P6 par rapport à chacun des embouts 60 et 62.

En pratique, pour des angles d'inclinaison A650 et A652 égaux à 28°, la plage de réglage de la longueur L6 de la bielle 6 atteint 12mm, pour une amplitude de mouvement transversal de l'étrier 640 égale à 11.3mm. Lorsque le cadre de lisses 14 est au croisement de la nappe des fils de chaîne, une augmentation de la longueur de la bielle L6 de 6mm se traduit par une augmentation de la hauteur du cadre de 8mm pour une géométrie du levier 8 qui placent les axes des articulations 84 et 82 respectivement à une distance de 150mm et 200mm de l'axe X8 de l'articulation 86.

A l'inverse, pour baisser le cadre de lisses 14, l'opérateur desserre la vis 642 de l'étrier 640. Cette opération de dévissage entraîne que la vis 642 cesse d'appuyer transversalement sur le barreau 610. Cependant, dans le cas de tirage T représenté à la figure 1, l'effet du poids du cadre 14 se traduit par un effort de compression sur la bielle 6. Cet effort de compression intervient selon l'axe longitudinal X6 de la bielle 6 et tend à rapprocher, de manière continue, les deux embouts 60 et 62. Les surfaces 612 et 630 sont donc en appui permanent sur, respectivement, les surfaces 650 et 652 de l'étrier 640.

Comme la vis 642 a été desserrée, l'étrier 640 est libre de se déplacer parallèlement à l'axe Y6 puisqu'il n'est pas maintenu par le barreau 610. Ainsi, l'effort de compression des embouts 60 et 62 résulte, du fait de la complémentarité des surfaces 612 et 630 avec les surfaces 650 et 652 de l'étrier, en un effort transversal transmis à l'étrier 640. Les surfaces 612, 630, 650 et 652 sont toutes convergentes, par rapport à l'axe Y6, vers le haut. Ainsi, l'étrier 640 se déplace vers le bas jusqu'à ce que la vis 642 entre en contact avec le barreau 610. On assure de cette manière un contact permanent entre la vis 642 et le barreau 610. Le déplacement de l'étrier 640 est donc, dans ce cas, simplement dû à la pesanteur et la lame 644 est inutile.

En revanche, en imaginant un tirage dont la géométrie fait que le poids du cadre ne résulte pas en un effort de compression sur la bielle 6, le desserrage de la vis 642 n'est pas suffisant pour déplacer l'étrier 640. A cet effet, c'est la lame 644 qui permet de déplacer l'étrier 640 vers le bas. Plus précisément, lorsque la bielle 6 est en position écartée, c'est-à-dire dans la configuration de la figure 4, la lame 644 est comprimée transversalement. Ainsi, lorsque l'on desserre la vis 642, le seul effort s'appliquant sur le barreau est celui du retour élastique de la lame 644. Le barreau 610 étant immobile dans le sens transversal, la lame 644 repousse donc l'étrier 640 vers le bas, c'est-à-dire dans le sens opposé à la vis 642. La lame 644 forme donc des moyens de rappel élastique de l'étrier 640 vers le bas et un jeu se crée entre les surfaces 650 et 612 et entre les surfaces 630 et 652. Le rapprochement des embouts 60 et 62 s'effectue donc manuellement.

Grâce à l'utilisation de cette lame 644, le contact entre la vis de réglage 642 et le barreau 610 est assuré même si les deux embouts n'exercent pas d'effort sur l'étrier. En particulier, l'étrier 640 est maintenu sur le barreau 610 dans le cas où les deux embouts 60 et 62 sont séparés. C'est pourquoi la bielle 6 est adaptable à tout type de géométrie de tirage.

Lorsque l'opérateur est parvenu à un ajustement satisfaisant de la hauteur du cadre de lisses 14, il serre alors les vis de serrage 620 afin de solidariser le premier embout 60 avec le deuxième embout 62. Le serrage des vis 620 se traduit en un effort de poussée de la lamelle d'appui 624 sur le barreau 610, ce qui renforce le serrage du barreau 610 dans l'étau formé par la plaquette de serrage 622 et la lame d'appui 624. Par la suite, il bloque la vis de réglage 642 en lui appliquant un couple de serrage supplémentaire qui garantit son immobilisation en cours de fonctionnement. En permettant l'écartement et le rapprochement des embouts 60 et 62 de la bielle 6 d'une valeur déterminée en relation avec la position de l'étrier 640 le long d'un axe perpendiculaire au plan contenant les deux axes d'articulation, les moyens d'écartement 64 constituent des moyens de réglage de la longueur L6 de la bielle 6.

Une fois la longueur réglée, il est possible de connaitre la valeur de l'écartement réalisé grâce à l'indicateur 66. Plus précisément, lors du déplacement de l'étrier 640, la partie recourbée 648 de l'entretoise 646 et le ressort 668 agissent simultanément sur le doigt de palpage 662. Le doigt de palpage est, dans le cas d'un raccourcissement de la bielle 6, repoussé à l'encontre de l'effort élastique du ressort 668. Le pion 664 porté par le doigt 662 se déplace également dans la fente graduée 666, on mesure ainsi la progression de celui-ci et donc la valeur de l'écartement. A l'inverse, lors d'une opération d'écartement, le ressort 668 se détend par retour élastique et pousse le doigt 662 contre la partie recourbée 648 de l'entretoise 646. Le mouvement du doigt 662, et donc du pion 664 à travers la fente graduée 666 permet de témoigner de l'écartement entre les deux embouts.

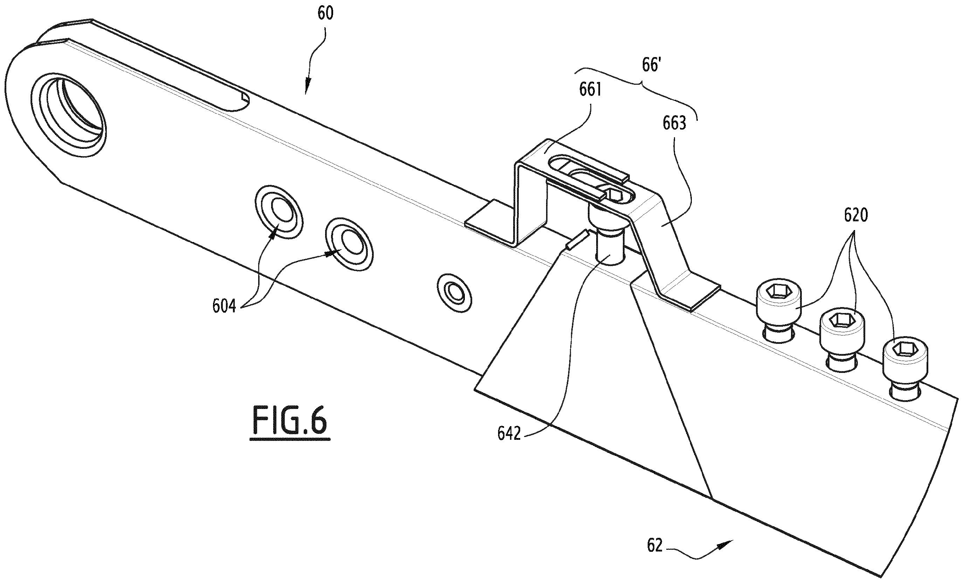

Dans les deuxième à quatrième modes de réalisation représentés aux figures 6 et suivantes, les éléments analogues à ceux du premier mode de réalisation portent les mêmes références et fonctionnent de la même façon. Dans ce qui suit, on décrit principalement ce qui distingue ces modes de réalisation du premier.

Sur la figure 6 est représentée une alternative à l'indicateur d'écartement 66 présenté aux figures 2 à 4. L'indicateur d'écartement 66' de ce mode de réalisation est formé par deux lames recourbées 661 et 663 qui sont fixées respectivement sur le premier embout 60 et sur le deuxième embout 62. L'écartement entre les deux embouts 60 et 62 est donc directement mesurable par l'écartement entre les deux lames 661 et 663.

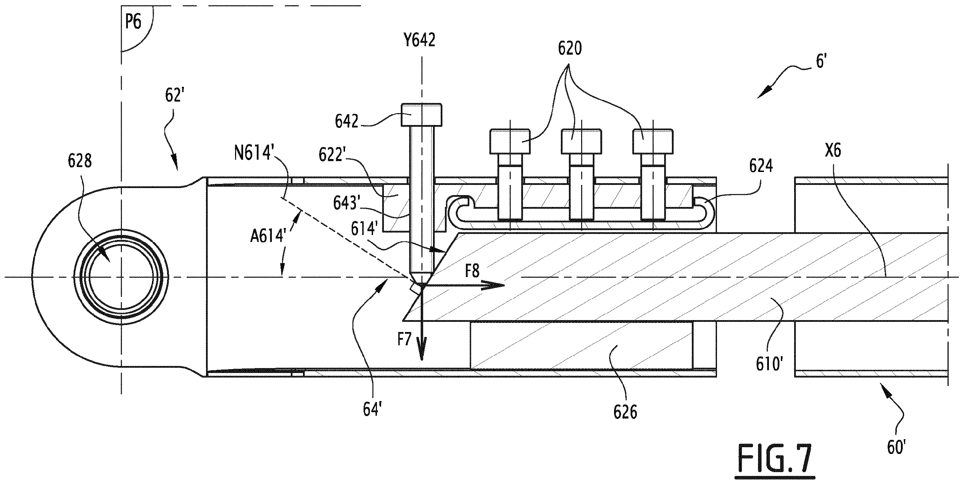

Le troisième mode de réalisation représenté sur la figure 7 diffère des deux premiers dans la mesure où la bielle 6' ne comporte pas d'étrier et où c'est un barreau 610' appartenant au premier embout 60' qui comporte, sur son extrémité avant, une surface 614' dont la normale N614' orientée vers l'extérieur du barreau 610' est inclinée d'un angle A614' par rapport à un axe longitudinal X6 de la bielle 6. La normale N614' est comprise dans un plan P6 de la bielle défini comme dans le premier mode de réalisation. Le premier embout 60' est solidarisé au barreau 610' par des moyens non représentés. Les moyens d'écartement 64' selon l'axe X6 du premier embout 60' et du deuxième embout 62' de la bielle 6' comportent une vis 642 insérée dans un taraudage 643' ménagé dans une plaquette de serrage 622', transversalement à l'axe X6, cette plaquette 622' étant immobilisée dans le deuxième embout 62'. La vis 642 prend appui sur la surface inclinée 614' du barreau 610'. Ainsi, la vis 642 constitue, dans ce mode de réalisation, l'organe d'appui qui agit sur la surface inclinée 614' du barreau 610'. La plaquette de serrage 622' agit à la fois au niveau du réglage de l'écartement et au niveau du serrage puisqu'elle supporte les vis de serrage 620 qui coopèrent avec la lame d'appui 624 comme dans le premier mode de réalisation. Le serrage de la vis 642 permet d'exercer un effort transversal F7 de la vis de serrage 642 sur la surface inclinée 614' du barreau 610'. Cet effort se transforme, grâce à l'utilisation de la surface inclinée 614', en un effort longitudinal F8 et permet de déplacer le barreau 610' vers l'arrière. Par ailleurs, cette transmission de mouvement est possible car le barreau 610' n'est pas encore serré dans l'étau formé par la plaquette de serrage 622 et la plaquette de bridage 626. En d'autres termes, le jeu de serrage du barreau 610' est tel que le barreau 610' est apte à coulisser par rapport au deuxième embout 62 selon une direction longitudinale à l'axe de la bielle. Le barreau 610' étant solidaire du premier embout 60, on obtient donc un déplacement du premier embout 60' par rapport au deuxième embout 62'. Le desserrage de la vis 642 permet le rapprochement entre les deux embouts 60' et 62'. Dans le cas de l'utilisation de la bielle 6' comme bielle d'attaque d'un tirage T tel qu'illustré à la figure 1, ce rapprochement est simplement dû à la gravité et s'opère de façon continue au cours du desserrage de la vis 642.

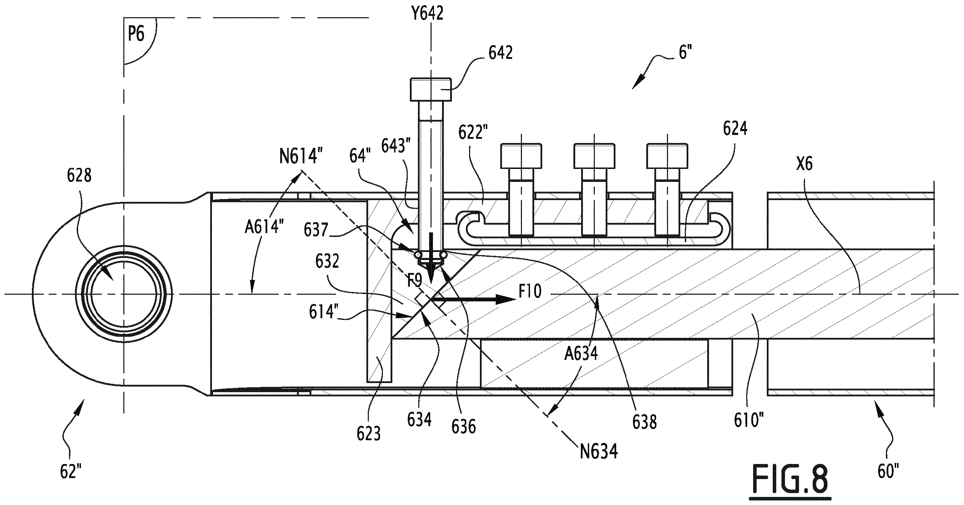

Sur la figure 8 est représenté un quatrième mode de réalisation de l'invention. Ce mode présente une bielle 6" qui diffère des deux précédentes au niveau de ses moyens d'écartement 64" selon l'axe X6 de ses embouts 60" et 62". La vis de réglage 642 prend appui sur un coin 632 ayant une surface avant 634, qui est inclinée de manière complémentaire à une surface 614" d'un barreau 610" appartenant à l'embout 60". On est donc en présence, comme dans le premier mode de réalisation, d'un dispositif à coin. A cet effet, le coin 632 comporte un alésage 636 de réception de l'extrémité de la vis 642. L'alésage 636 comporte une gorge 637 circulaire adaptée pour loger un anneau élastique 638 de retenue disposé autour de la vis 642. On assure de cette manière la solidarisation du coin 632 en translation axiale selon l'axe Y642 entre la vis 642 et le coin 632. On note respectivement A614" et A634 l'angle entre la normale N614" de la surface 614" orientée vers l'extérieur du barreau 610" et l'axe X6 et l'angle entre la normale N634 de la surface 634 orientée vers l'extérieur du coin 632 et l'axe X6 dans le plan de la figure 7. Les angles A614" et A634 ont la même valeur qui peut être la même que dans le premier mode de réalisation. La normale N614" est comprise dans un plan P6 défini comme dans le premier mode de réalisation.

L'effort transversal F9 exercé par la vis 642 sur le coin 632 résulte, par complémentarité des surfaces 634 et 614", en un effort longitudinal F10 exercé par le coin 632 sur le barreau 610". De manière analogue à la bielle 6', le jeu de serrage du barreau 610" permet le coulissement du barreau 610" selon la direction longitudinale de la bielle. On réalise de cette manière, un écartement entre le premier embout 60" et le deuxième embout 62". Par ailleurs, la bielle 6" comporte une plaque de serrage 622" qui est utilisée à la fois pour le réglage et pour le serrage puisqu'elle comprend un taraudage 643" de réception de la vis de réglage 642. La plaquette 622" comporte en outre une patte 623 qui s'étend transversalement à l'axe de la bielle 6". Cette patte 623 permet le guidage du coin 632 parallèlement à l'axe Y642. De manière analogue au premier mode de réalisation, il convient, une fois que la longueur est réglée, de manoeuvrer les moyens de serrage 621 pour immobiliser les embouts 60" et 62" l'un par rapport à l'autre.

Dans les troisième et quatrième modes de réalisation, la vis 642 et le coin 632 se déplacent perpendiculairement à un plan contenant les axes d'articulation de la bielle à ses extrémités, ce plan étant équivalent au plan P34 du premier mode de réalisation.

Selon une variante applicable à tous les modes de réalisation, la vis de réglage 642 est inclinée selon un angle d'environ 30° par rapport à l'axe transversal Y6 de la bielle 6. Cela est susceptible d'en améliorer l'accessibilité mais à pour inconvénient d'imposer d'effectuer des tours de vis de réglage supplémentaire pour obtenir le même écartement que lors de l'utilisation d'une vis rigoureusement perpendiculaire à l'axe longitudinal X6 de la bielle 6.

Selon une autre variante, il est possible d'utiliser une mécanique d'armure fondamentale à la place de la ratière 2.

Selon une autre variante, la bielle 6 à longueur variable n'est pas positionnée en sortie du dispositif de formation de la foule 2 mais à un autre endroit du tirage T, par exemple en tant que bielle au cadre.

Selon une variante applicable aux deux premiers modes de réalisation, une seule surface inclinée est présente sur un embout ainsi que sur l'étrier 640 pour réaliser un écartement entre les deux embouts 60 et 62. La plage de réglage est alors deux fois moindre que dans les deux premiers modes de réalisation de l'invention.

Selon une autre variante, l'entretoise 646 est maintenue solidaire de l'étrier 640 par coincement.

Selon une autre variante, les moyens d'écartement 64 ne comportent pas de lame flexible 644.

Les caractéristiques techniques des modes de réalisation et variantes envisagés ci-dessus peuvent être combinées entre elles pour donner de nouveaux modes de réalisation.

## Revendications

1. Bielle (6 ; 6' ; 6") permettant une liaison entre deux articulations (83, 84) d'axes parallèles et une transmission à un cadre de lisses (14) appartenant à un métier à tisser (M), des mouvements d'oscillation d'un levier de sortie (4) d'un dispositif (2) de formation de la foule, cette bielle comprenant
- un premier embout (60 ; 60' ; 60") de liaison à une première articulation (83) et solidaire d'un barreau longitudinal (610 ; 610' ; 610"),
- un deuxième embout (62 ; 62' ; 62") de liaison à une deuxième articulation (84) et comportant des moyens (621) de serrage du barreau accessibles depuis un côté de la bielle et
- des moyens d'écartement (64 ; 64' ; 64") des embouts le long d'un axe longitudinal (X6) de la bielle,
**caractérisée**
- **en ce que** les moyens d'écartement (64 ; 64' ; 64") comprennent un organe d'appui (640 ; 642 ; 632) sur une surface inclinée (612,630 ; 614' ; 614") dont la normale (N612, N630 ; N614'; N614") est comprise dans un plan perpendiculaire (P6) aux axes des articulations et inclinée par rapport à l'axe longitudinal (X6) de la bielle et
- **en ce que** l'organe d'appui (640 ; 642 ; 632) est déplaçable dans une direction (Y6) perpendiculaire à un plan (P34) contenant les axes (X3, X4) des articulations (83, 84).

2. Bielle selon la revendication 1, **caractérisée en ce que** la surface inclinée (612, 630 ; 614' ; 614") appartient à l'un au moins des embouts (60, 62) ou au barreau (610' ; 610").

3. Bielle selon l'une des revendications précédentes, **caractérisée en ce que** la normale (N612, N630 ; N614' ; N614") orientée vers l'extérieur de la surface inclinée (612, 630 ; 614' ; 614") est inclinée par rapport à l'axe longitudinal (X6) de la bielle d'un angle (A612, A630 ; A614' ; A614") compris entre 20 et 50 degrés.

4. Bielle selon la revendication 3, **caractérisée en ce que** la surface inclinée (614' ; 614") est réalisée sur le barreau (610' ; 610").

5. Bielle selon la revendication 4, **caractérisée en ce que** l'organe d'appui est un coin (632) qui prend appui sur la surface inclinée (614") du barreau (610").

6. Bielle selon la revendication 4, **caractérisée en ce que** l'organe d'appui est une vis de réglage (642).

7. Bielle selon l'une des revendications 1 à 3, **caractérisée en ce que** l'organe d'appui est un étrier (640), intercalé entre le premier embout (60) et le deuxième embout (62) et présentant une ouverture (V640) s'étendant suivant un axe (X640) parallèle à l'axe longitudinal de la bielle (X6) et entourant le barreau (610).

8. Bielle selon la revendication 7, **caractérisée en ce que** l'étrier (640) comporte au moins une surface d'appui (612, 630) dont la normale (N612, N630) est inclinée par rapport à l'axe longitudinal (X6) de la bielle (6).

9. Bielle selon l'une des revendications 7 et 8, **caractérisée en ce que** l'étrier (640) comporte une vis de réglage (642) apte à déplacer l'étrier dans une direction perpendiculaire à un plan (P34) contenant les axes (X3, X4) des articulations (83, 84) de la bielle.

10. Bielle selon la revendication 9, **caractérisée en ce que** l'étrier (640) comporte des moyens (644) de rappel élastique de l'étrier (640) s'opposant à l'action de la vis de réglage (642).

11. Bielle selon l'une des revendications précédentes, **caractérisée en ce que** les moyens d'écartement (64 ; 64' ; 64") des embouts de la bielle et les moyens de serrage (621) du barreau (610 ; 610' ; 610") sont manoeuvrables depuis le même côté de la bielle.

12. Bielle selon l'une des revendications précédentes, **caractérisée en ce que** la bielle (6 ; 6' ; 6") est munie d'un moyen d'indication (66 ; 66') de l'écartement entre les deux embouts (60, 62 ; 60', 62' ; 60", 62") le long de l'axe longitudinal (X6).

13. Bielle selon la revendication 12 , **caractérisée en ce que** le moyen d'indication (66) de l'écartement entre les deux embouts (60 ; 62) le long de l'axe longitudinal (X6) agit entre un (60) des embouts et les moyens d'écartement (64) des deux embouts.

14. Métier à tisser (M) **caractérisé en ce qu'**il comprend une bielle (6 ; 6' ; 6") selon l'une des revendications précédentes.

## Patentansprüche

1. Pleuelstange (6; 6',; 6"), die eine Verbindung zwischen zwei Gelenken (83, 84) paralleler Achsen und eine Übertragung von Oszillationsbewegungen eines Ausgangshebels (4) einer Fachbildungsvorrichtung (2) auf einen Schaftrahmen (14), der zu einer Webmaschine (M) gehört, ermöglicht, wobei diese Pleuelstange umfasst
- ein erstes Endstück (60; 60', 60") zum Verbinden mit einem ersten Gelenk (83) und verbunden mit einem Längsstab (610; 610'; 610"),
- ein zweites Endstück (62; 62'; 62") zum Verbinden mit einem zweiten Gelenk (84) und Mittel (621) zum Verklemmen des Stabes aufweisend, die von einer Seite der Pleuelstange zugänglich sind, und
- Mittel (64; 64'; 64") zum Beabstanden der Endstücke entlang einer Längsachse (X6) der Pleuelstange,
**dadurch gekennzeichnet, dass**
- die Mittel (64; 64'; 64") zum Beabstanden ein Element (640; 642; 632) zur Auflage auf eine geneigte Fläche (612, 630; 614'; 614"), deren Normale (N612, N630; N614'; N614") in einer Ebene (P6) senkrecht zu den Achsen der Gelenke und in Bezug auf die Längsachse (X6) der Pleuelstange geneigt sind, und
- das Auflageelement (640; 642; 632) in einer Richtung (Y6) senkrecht zu einer Ebene (P34), die die Achsen (X3, X4) der Gelenke (83, 84) enthält, verschiebbar ist.

2. Pleuelstange nach Anspruch 1, **dadurch gekennzeichnet, dass** die geneigte Fläche (612, 630; 614'; 614") zu mindestens einem Endstück (60, 62) oder zu dem Stab (610'; 610") gehört.

3. Pleuelstange nach einem der vorhergehenden Ansprüche, **dadurch gekennzeichnet, dass** die Normale (N612, N630; N614'; N614"), die zu der geneigten Fläche (612, 630; 614'; 614") nach außen gerichtet ist, in Bezug auf die Längsachse (X6) der Pleuelstange um einen Winkel (A612, A630; A614'; A614") geneigt ist, der zwischen 20 und 50 Grad liegt.

4. Pleuelstange nach Anspruch 3, **dadurch gekennzeichnet, dass** die geneigte Fläche (614'; 614") auf dem Stab (610'; 610") hergestellt ist.

5. Pleuelstange nach Anspruch 4, **dadurch gekennzeichnet, dass** das Auflageelement ein Keil (432) ist, der auf der geneigten Fläche (614") des Stabs (610") zur Auflage kommt.

6. Pleuelstange nach Anspruch 4, **dadurch gekennzeichnet, dass** das Auflageelement eine Einstellschraube (642) ist.

7. Pleuelstange nach einem der Ansprüche 1 bis 3, **dadurch gekennzeichnet, dass** das Auflageelement ein Bügel (640) ist, der zwischen dem ersten Endstück (60) und dem zweiten Endstück (62) zwischengeschaltet ist und eine Öffnung (V640) aufweist, die sich gemäß einer Achse (X640) parallel zur Längsachse der Pleuelstange (X6) erstreckt, und der den Stab (610) umgibt.

8. Pleuelstange nach Anspruch 7, **dadurch gekennzeichnet, dass** der Bügel (640) mindestens eine Auflagefläche (612, 630) aufweist, deren Normale (N612, N630) in Bezug auf die Längsachse (X6) der Pleuelstange (6) geneigt ist.

9. Pleuelstange nach einem der Ansprüche 7 und 8, **dadurch gekennzeichnet, dass** der Bügel (640) eine Einstellschraube (642) aufweist, die geeignet ist, den Bügel in eine Richtung senkrecht zu einer Ebene (P34) zu verschieben, die die Achsen (X3, X4) der Gelenke (83, 84) der Pleuelstange enthält.

10. Pleuelstange nach Anspruch 9, **dadurch gekennzeichnet, dass** der Bügel (640) Mittel (644) zum elastischen Rückstellen des Bügels (640) aufweist, die sich der Wirkung der Einstellschraube (642) entgegenstellen.

11. Pleuelstange nach einem der vorhergehenden Ansprüche, **dadurch gekennzeichnet, dass** die Mittel (64; 64'; 64") zum Beabstanden der Endstücke der Pleuelstange und die Mittel (621) zum Klemmen des Stabs (610; 610'; 610") von einer selben Seite der Pleuelstange betätigbar sind.

12. Pleuelstange nach einem der vorhergehenden Ansprüche, **dadurch gekennzeichnet, dass** die Pleuelstange (6; 6'; 6") mit einem Anzeigemittel (66; 66') des Abstands zwischen den zwei Endstücken (60, 62; 60', 62'; 60", 62") entlang der Längsachse (X6) versehen ist.

13. Pleuelstange nach Anspruch 12, **dadurch gekennzeichnet, dass** die Anzeigemittel (66) des Abstands zwischen den zwei Endstücken (60; 62) entlang der Längsachse (X6) zwischen einem (60) der Endstücke und den Mitteln (64) zum Beabstanden der zwei Endstücke wirkt.

14. Webmaschine (M), **dadurch gekennzeichnet, dass** sie eine Pleuelstange (6; 6', 6") nach einem der vorhergehenden Ansprüche umfasst.

## Claims

1. A connecting rod (6; 6'; 6") with two articulations (83, 84) with parallel axes and for transmitting the rocking movements of an output lever (4) of a shedding device (2) to a heald frame (14) belonging to a weaving loom (M), said connecting rod comprising
- a first connecting tip (60; 60'; 60") connecting to a first articulation (83) and secured to a longitudinal bar (610; 610'; 610"),
- a second connecting tip (62; 62'; 62") connecting to a second articulation (84) and including means (621) for clamping the bar that are accessible from one side of the connecting rod, and
- means (64; 64'; 64") for separating the tips along a longitudinal axis (X6) of the connecting rod,
**characterized in that**
- the separating means (64; 64'; 64") comprise a bearing member (640; 642; 632) on an inclined surface (612; 630; 614'; 614") whereof the normal (N612, N630; N614'; N614") is comprised in a plane (P6) perpendicular to the axes of the articulations and is inclined relative to the longitudinal axis (X6) of the connecting rod, and
- the bearing member (640; 642; 632) can be moved in a direction (Y6) perpendicular to a plane (P34) containing the axes (X3, X4) of the articulations (83, 84).

2. The connecting rod according to claim 1, **characterized in that** the inclined surface (612, 630; 614'; 614") belongs to at least one of the tips (60, 62) or to the bar (610'; 610").

3. The connecting rod according to one of the preceding claims, **characterized in that** the normal (N612, N630; N614'; N614") oriented toward the outside of the inclined surface (612, 630; 614'; 614") is inclined relative to the longitudinal axis (X6) of the connecting rod (A612, A630; A614'; A614") by an angle comprised between 20 and 50 degrees.

4. The connecting rod according to claim 3, **characterized in that** inclined surface (614'; 614") is made on the bar (610'; 610").

5. The connecting rod according to claim 4, **characterized in that** the bearing member is a corner (632) that bears on the inclined surface (614") of the bar (610").

6. The connecting rod according to claim 4, **characterized in that** the bearing member is an adjusting screw (642).

7. The connecting rod according to one of claims 1 to 3, **characterized in that** the bearing member is a stirrup (640), inserted between the first tip (60) and the second tip (62) and having an opening (V640) extending along an axis (X640) parallel to the longitudinal axis of the connecting rod (X6) and surrounding the bar (610).

8. The connecting rod according to claim 7, **characterized in that** the stirrup (640) includes at least one bearing surface (612, 630), the normal (N612, N630) of which is inclined relative to the longitudinal axis (X6) of the connecting rod (6).

9. The connecting rod according to one of claims 7 and 8, **characterized in that** the stirrup (640) includes an adjusting screw (642) capable of moving the stirrup in a direction perpendicular to a plane (P34) containing the axes (X3, X4) of the articulations (83, 84) of the connecting rods.

10. The connecting rod according to claim 9, **characterized in that** the stirrup (640) includes elastic return means (644) for the stirrup (640) opposing the action of the adjusting screw (642).

11. The connecting rod according to one of the preceding claims, **characterized in that** the means (64; 64'; 64") for separating the tips of the connecting rod and the means (621) for clamping the bar (610; 610'; 610") can be maneuvered from the same side of the connecting rod.

12. The connecting rod according to one of the preceding claims, **characterized in that** the connecting rod (6; 6'; 6") is provided with means (66; 66') for indicating the separation between the two tips (60, 62; 60', 62'; 60", 62") along the longitudinal axis (X6).

13. The connecting rod according to claim 12, **characterized in that** the means (66) for indicating the separation between the two tips (60; 62) along the longitudinal axis (X6) act between one (60) of the tips and the means (64) for separating the two tips.

14. A weaving loom (M) **characterized in that** it comprises a connecting rod (6; 6'; 6") according to one of the preceding claims.
